# FASCICULE DE BREVET EUROPEEN

(11) **EP 1 777 526 B1**
(45) Date de publication et mention de la délivrance du brevet: **22.07.2009**
(21) Numéro de dépôt: 06122701.3
(22) Date de dépôt: 20.10.2006
(51) Int. Cl.: G01P 3/489

(54) **Procédé et système de détection et de mesure des perturbations en fréquence de la vitesse de rotation d'un rotor**
Verfahren und System zur Erfassung von Frequenzstörungen bei der Messung der Drehgeschwindigkeit eines Rotors
Process and system for detecting frequency perturbations during measurement of the rotational speed of a rotor

(30) Priorité: 21.10.2005 FR 0553209
(43) Date de publication de la demande: 25.04.2007
(73) Titulaire: SNECMA, 75015 Paris (FR)
(72) Inventeur: Gerez, Valério, 91330, YERRES (FR)
(74) Mandataire: David, Daniel

(56) Documents cités:
- US-A- 4 195 291
- US-A- 4 506 312
- US-A- 4 742 332
- US-A- 4 835 467
- US-A- 5 103 213
- US-A- 5 170 365
- US-B1- 6 876 167

## Description

L'invention concerne les systèmes de détection et de mesure des perturbations en fréquence de la vitesse de rotation d'un rotor de moteur d'avion, et plus généralement d'un régime moteur quelconque.

Actuellement, la détection et la mesure des variations ou perturbations basse fréquence de la rotation d'un rotor s'effectue en deux étapes :
- une étape d'acquisition et d'enregistrement des signaux analogiques délivrés par un détecteur de proximité disposé sur la circonférence d'une roue dentée, dite roue phonique, coaxiale et solidaire du rotor.
- une étape d'analyse du signal en différé des signaux de l'enregistrement et d'édition des résultats de l'analyse.

Un tel système d'analyse est connu par le brevet US 6,876,167. Il permet de mesurer la vitesse du rotor avec un capteur mesurant une caractéristique dynamique du rotor puis de l'analyser en différé pour détecter un dysfonctionnement.

Ce système d'analyse ne convient pas lorsque l'on veut disposer des résultats en temps réel, notamment lorsque ces résultats concernent des rotors de moteurs d'avion et sont destinés à alimenter un système de sécurité en vol.

La demanderesse a cherché à résoudre ce problème et à disposer d'un procédé permettant de reconnaître en temps réel les perturbations de vitesse d'un rotor de moteur d'avion.

A cet effet, l'invention concerne tout d'abord un procédé de détection des variations de régime d'un rotor caractérisé par le fait qu'il consiste, en temps réel, à :
- mesurer des signaux représentatifs du défilement des dents d'une roue phonique ou d'un moyen équivalent solidaire du rotor pendant une durée déterminée,
- échantillonner, numériser et mémoriser les mesures effectuées pour obtenir un vecteur numérique initial,
- extraire du vecteur initial un signal de détection autour d'une fréquence perturbatrice connue,
- comparer le signal de détection à un seuil prédéterminé, et
- délivrer un message d'alerte en cas de dépassement.

Il est ainsi possible de réagir immédiatement à l'apparition d'une fréquence perturbatrice connue sur le régime moteur, telles que les perturbations de fréquences plus faibles que celle de la rotation du rotor, par exemple en changeant temporairement de régime moteur pour enrayer la perturbation dès que possible.

De préférence, pour extraire un signal de détection de la fréquence perturbatrice :
- on filtre le vecteur initial et on obtient un vecteur filtré,
- on détecte des pics d'alternance des signaux,
- on date les pics, on calcule les intervalles de temps séparant les pics adjacents, on établit l'évolution temporelle du régime à partir de ces intervalles, et
- on filtre ladite évolution autour de la fréquence perturbatrice connue.

Avantageusement les vecteurs ci-dessus sont repérés relativement à une base temporelle de dimension déterminée à partir du régime, des caractéristiques des moyens de mesure et de la fréquence perturbatrice connue.

Les opérations vectorielles appliquées aux vecteurs ne comprennent que des sommes, des différences, des décalages de coordonnées.

Ce procédé évite des calculs compliqués à faire en temps réel.

Avantageusement encore, on échantillonne les signaux à une fréquence au moins deux fois plus élevée que celles des transitoires qui y sont éventuellement présents, de façon à se réserver la possibilité d'analyser aussi les perturbations de fréquences supérieures à celle de la rotation du rotor.

L'invention concerne également un système de détection des variations de régime d'un rotor, comprenant des moyens de mesure comportant un capteur délivrant en temps réel des signaux représentatifs de la vitesse de rotation du rotor, caractérisé par le fait qu'il comprend des moyens de traitement des signaux comportant un bloc de calcul calculant en temps réel la vitesse de rotation pour, le cas échéant, instantanément émettre un message de perturbation du régime.

De préférence, le bloc de calcul délivre un message d'apparition anormale d'une perturbation de fréquence plus faible que la fréquence de rotation du rotor.

De préférence encore, les moyens de mesure comportent une roue phonique solidaire du rotor délivrant des signaux représentatifs du défilement des dents de la roue phonique, et dans lequel les moyens de traitement échantillonnent lesdits signaux avant de les numériser et de les mémoriser sous forme numérique.

Avantageusement, les moyens de traitement échantillonnent les signaux à une fréquence au moins deux fois plus élevée que celle maximale des perturbations transitoires qui peuvent y être présents, ce qui permet d'analyser également les perturbations de fréquence plus élevée que la fréquence de rotation du rotor..

Le système de détection de l'invention permet notamment de mettre en oeuvre le procédé ci-dessus.

L'invention sera mieux comprise à l'aide de la description suivante d'un exemple de réalisation du système de détection des variations basse fréquence de la vitesse de rotation d'un rotor selon l'invention, en référence au dessin annexé, sur lequel :
- la figure 1 est une vue schématique d'un rotor et de ses moyens de détection entrant dans la composition du système de détection selon l'invention,
- la figure 2 est un exemple de chronogramme temporel des signaux délivrés par les moyens de détection ci-dessus,
- la figure 3 est un schéma par blocs fonctionnels du système de détection selon l'invention,
- la figure 4 est un organigramme fonctionnel du procédé de traitement de signaux pour détecter la perturbation de régime, selon l'invention,
- la figure 5 est un schéma montrant la structure et l'évolution des calculs du module de filtrage,
- la figure 6 est un chronogramme temporel montrant l'effet du filtrage ci-dessus,
- la figure 7 est un schéma montrant la structure et l'évolution des calculs du module de détection de pics,
- la figure 8 est un chronogramme temporel montrant l'effet de la détection ci-dessus,
- la figure 9 est un schéma montrant l'évolution des calculs des variations de la vitesse de rotation du rotor,
- la figure 10 montre un gabarit de filtrage pour filtrer la perturbation conformément à l'invention, et
- la figure 11 montre un diagramme temporel d'évolution de la vitesse de rotation du rotor obtenu par le système de détection selon l'invention, auquel est adjoint le diagramme du résultat de l'application du filtrage de la perturbation.

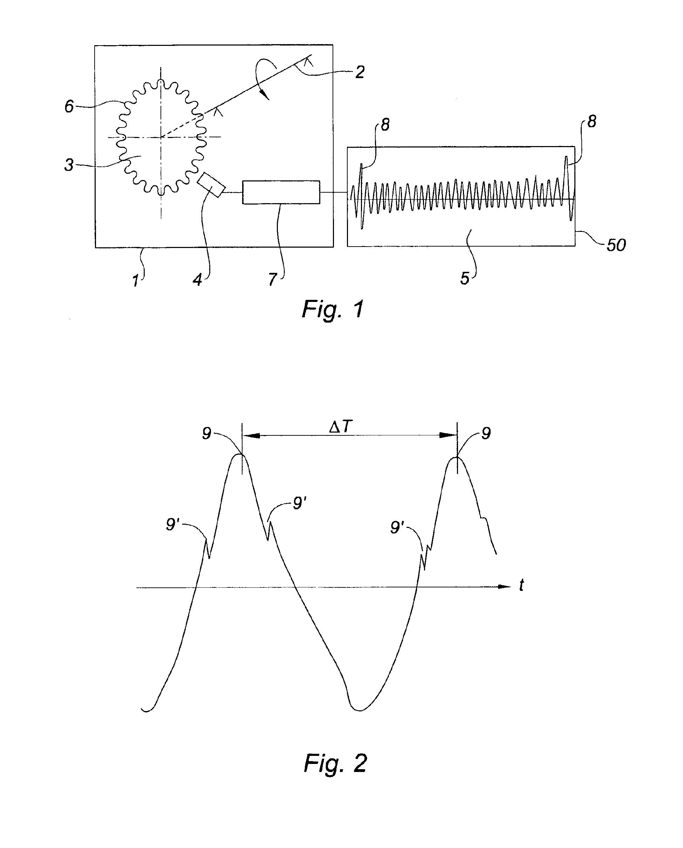

En référence à la figure 1, les moyens 1 de mesure des variations ou perturbations en fréquence F de la vitesse de rotation ou du régime R d'un rotor 2, ou autre axe tournant, sont principalement constitués d'une roue phonique 3 et d'un capteur 4.

Une roue phonique est une roue dentée de même axe que le rotor 2 et entraînée par lui. Comme capteur 4, il peut s'agir d'une bobine d'induction et les dents 6 de la roue 3 porter un matériau magnétique.

Mais tout autre moyen capable de délivrer des tops de fractions de tours du rotor 2 peut convenir. Suivant la technologie de ce moyen, il est possible que certaines opérations de filtrage ci-après exposées ne soient plus nécessaires.

Les matériaux magnétiques excitent la bobine au défilement des dents devant le capteur et génèrent ainsi des signaux de rotation (non représentés) représentatifs de ce défilement pour servir à la mesure de la vitesse de rotation du rotor 2.

Les signaux de rotation sont mis en forme par un circuit conditionneur 7 qui délivre un signal de mesure analogique 5, et ayant approximativement la forme d'un signal triangulaire pseudo - périodique reproduisant sensiblement la forme des dents 6.

Ordinairement, le signal 5 est enregistré par un moyen d'enregistrement analogique 50 tel qu'un enregistreur de bande magnétique pour l'analyse ultérieure du signal.

La roue 3 comporte n dents, l'une d'elles étant plus grande que les n - 1 autres, de sorte que le signal 5 contient des alternances de signal plus grandes 8 constituant des tops de tours de rotation du rotor 2.

On montre plus précisément en figure 2 la forme de quelques alternances du signal 5. Il comporte des alternance positives et négatives, les sommets 9 ou les pics de deux alternances positives successives étant séparés d'un intervalle de temps ou pseudo - période ΔT.

On constate aussi que le signal 5 peut être entaché de bruits parasites et transitoires 9' généralement dus à des perturbations transitoires « hautes » fréquences, c'est-à-dire de fréquences plus élevées que la fréquence de rotation du rotor 2. Ils peuvent donner lieu à une détection erronée de période ΔT.

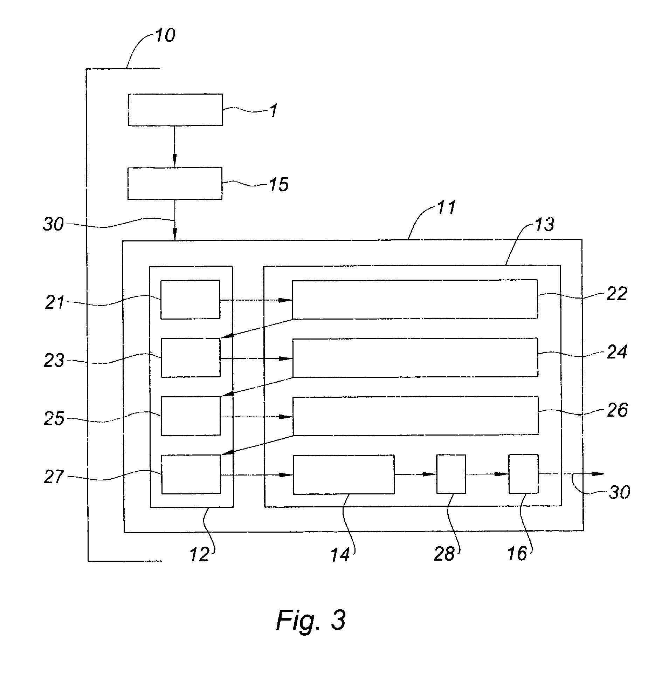

Ici, en référence à la figure 3, les moyens de mesure 1 font partie d'un système 10 de détection en temps réel des variations du régime R.

Ces variations sont des fluctuations appelées « basse fréquence », de fréquence F connue, c'est-à-dire plus faible que la fréquence de rotation du rotor 2.

Le système 10 comporte en outre des moyens de traitement constitués d'un convertisseur analogique - numérique CAN 15 et d'une unité de traitement 11 des signaux numériques. L'unité de traitement peut par exemple être constituée d'un microprocesseur.

Le convertisseur 15 et l'unité 11 sont reliés par un bus 30 de données numériques.

L'unité 11 comporte un bloc de calcul 12 et une mémoire RAM 13 (random access memory) associée au bloc 12, pour servir à la mémorisation et au traitement des données numérisées issues du CAN 15.

Le bloc 12 est aussi relié à un circuit électronique DSP 16 (digital signal processing ou circuit de traitement numérique des signaux) de traitement du signal et de signalisation. Ici la signalisation consiste en l'émission d'un message en temps réel sur un bus informatique 30 vers un système de sécurité (non représenté).

Le CAN 15 numérise les signaux 5 en les échantillonnant à une fréquence Fe choisie au moins égal à 2,56 / ΔT, en application du théorème de Shannon.

Cette fréquence est ainsi suffisante pour obtenir des données échantillonnées et numérisées permettant d'analyser correctement les « basses fréquence » présentes dans les signaux 5 délivrés par les moyens de mesure 1.

Mais la fréquence Fe peut aussi être choisie supérieure à celle ci-dessus au point d'être suffisante pour pouvoir analyser les bruits parasites transitoires 9' dus à des perturbations transitoires.

Le bloc de calcul 12 comporte un module 21 de stockage des données numérisées, un module de filtrage 23, un module 25 de détection des sommets ou des pics, et un module de datation 27.

Le module 21 stocke les données numérisées et les range en une colonne de valeurs selon l'ordre d'échantillonnage, valeurs repérées par une colonne d'indices i, qui lui est parallèle. Le module de filtrage 23 filtre les données jusqu'à faire disparaître les bruits transitoires 9'. Le module 25 détecte des sommets ou des pics, c'est-à-dire des valeurs maximales des échantillons correspondant aux passages des sommets des dents 6 en face du capteur 4. Le module de datation 27 date ces passages et en déduit les intervalles de temps ΔT les séparant.

La mémoire 13 est structurée en quatre mémoires 22, 24, 26, 14 contenant chacune une table et mémorisant les données numériques issues de l'échantillonnage du signal 5 et les traitements successifs des modules 21, 23, 25 et 27.

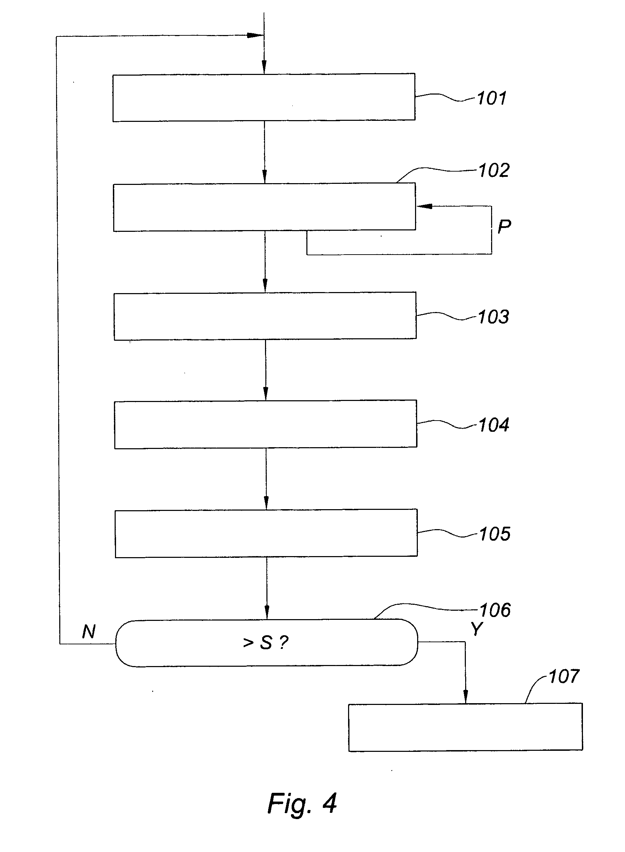

Les figures 4, 6, 8 montrent un exemple de chacune des tables des mémoires 22, 24, 26, 14 ci-dessus.

Les colonnes de valeurs et d'indices forment un vecteur initial de valeurs numérotées de 1 à N, et un vecteur base servant de repère temporel, chaque indice ou ligne i correspondant à une coordonnée temporelle du vecteur initial. La mémoire RAM 13 comporte d'autres vecteurs « dérivés », décrits dans la suite du document, référencés dans le même repère.

Comme on l'a vu plus haut, Fe est choisie au moins égale à 2,56 / ΔT, c'est-à-dire 2,56.n.R, Te doit être inférieur à 1 / 2,56.n.R et la durée d'analyse T doit au moins être supérieure à 1 / F, ce qui dimensionne la taille N des vecteurs dans la mémoire RAM 13.

Mais pour effectuer une moyenne sur k analyses, il est préférable de choisir T légèrement supérieur à k / F.

Par ailleurs, un temps Te, égal à 1 / Fe, sépare les valeurs successives d'indice i et i+1, comme il va être expliqué plus en détail par la suite,

Il en résulte que la taille N des mémoires 22, 24, 26, 14 doit donc être au moins égale à T / Te, c'est-à-dire à 2,56.n.R / F, ou mieux 2,56.k.n.R / F. Elle dépend donc du nombre n de dents 6 de la roue phonique 3, du régime R et de la fréquence perturbatrice F.

Le fonctionnement du système 10 va maintenant être expliqué en référence aux figures 4 à 9.

Le rotor 2 tournant, la périphérie de la roue 3 défile devant le capteur 4, ce qui provoque l'apparition du signal analogique 5.

Le signal 5 est échantillonné et converti en données numériques dans le convertisseur 15, qui les transmet au bloc de calcul 12 de l'unité 11 par le bus 30.

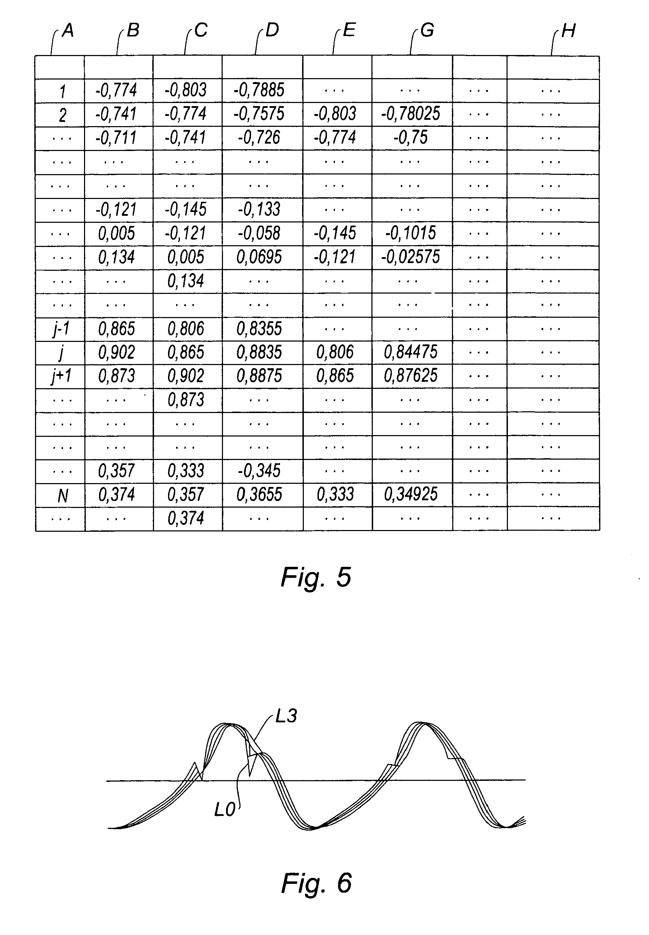

Lors d'une étape 101, en référence à la figure 4, le module de stockage 21 du bloc 12 range les valeurs de ces données, en même temps que les indices i, dans les deux premières colonnes, la colonne A « indice » ou repère temporel, et la colonne B « échantillon » correspondant à la valeur de la donnée correspondant à l'indice i, de la table de la mémoire 22 montrée en figure 5.

La colonne B « échantillon » constitue un vecteur initial de données à N coordonnées temporelles. Le stockage des données dans la table s'arrête quand la table est pleine, i étant alors égal à N.

Les traitements suivants, expliqués ci après, peuvent être exécutés très rapidement, si bien qu'une étape 101 suivante peut être effectuée à la suite sans inconvénient. On peut aussi, éventuellement, doubler le nombre des tables et les exploiter alternativement, de façon à ne perdre aucune donnée échantillonnée.

Le bloc de calcul 12 effectue alors des opérations vectorielles sur le vecteur initial et sur ceux dérivés de ce vecteur obtenus à la suite d'opérations vectorielles successives comprenant exclusivement des décalages, des sommes et des différences, dans l'espace temporel de dimension N, dans l'ordre qui va être décrit maintenant.

Le bloc 12 lance le module de filtrage 23, lequel, lors d'une étape 102, lit la table de la mémoire 22, la complète en remplissant la table de la mémoire 24 :
1) d'une colonne C « 1^{er} décalage » qui est un vecteur obtenu par décalage de une ligne, des lignes i à i+1, des données du vecteur initial, ce qui constitue une opération de décalage des coordonnées temporelles du vecteur initial dans l'espace temporel de dimension N,
2) d'une colonne D « 1^{ière} moyenne », obtenue en calculant, pour chacune de ses lignes i, la somme B+C des valeurs des données en ligne i des deux colonnes précédentes B et C, divisée par deux pour en obtenir la moyenne (mais cette division n'est pas obligatoire).
3) Le module 23 réitère p fois ces deux opérations jusqu'à obtenir une colonne « p+1^{ième} décalage » (non représentée) et d'une colonne H « p+1^{ième} moyenne ».

On montre, sur la figure 6, le filtrage L3 du signal 5 d'origine, désigné Lo, obtenu par ce calcul si p+1 = 3. Les bruits transitoires 9' ont disparu.

Dans le cas où l'on recherche une perturbation « haute » fréquence provoquant des impulsions ou bruits transitoires 9', l'étape 102 est sautée.

A la fin du filtrage, le bloc 12 lance le module 25 pour exécuter une étape 103 de détection de pics.

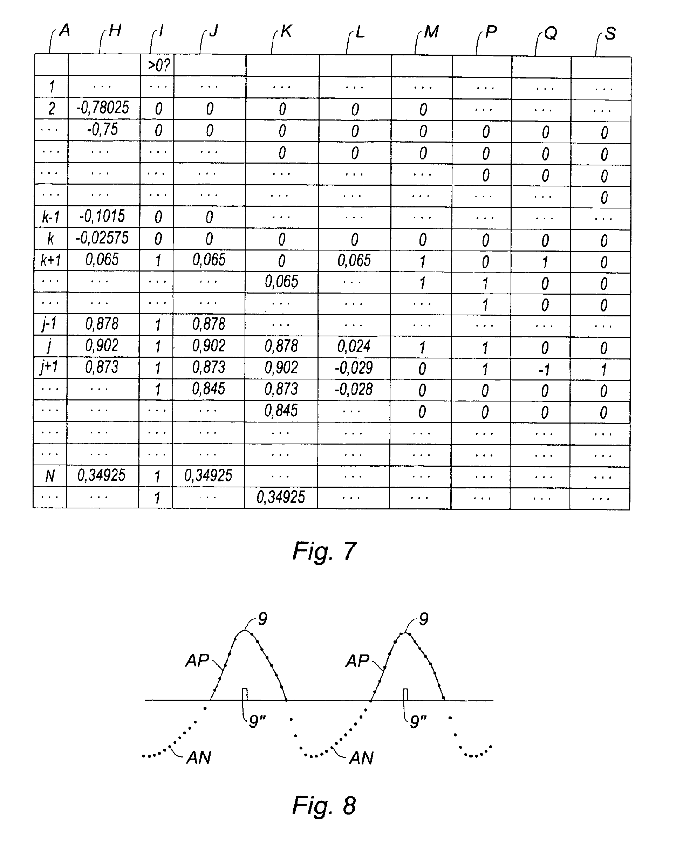

Pour cela, le module 25 lit la table de la mémoire 24, la complète par la table de la mémoire 26, successivement des colonnes ou vecteurs I « p+1^{ième} moyenne >0 ? », J « alternance >0 », de premières colonnes K « décalage » et L « différence », d'une colonne M « différence >0 ?», de secondes colonnes P « décalage » et Q « différence » et enfin d'une colonne S « différence des pics <0 », comme montrées en figure 7.

Plus précisément, le module 25 :
1) remplit les lignes i de la colonne I « p+1^{ième} moyenne >0 ? » de 1 ou de 0 de la façon suivante:
   - si la ligne i de la dernière colonne H de la table de la mémoire 22 contient une valeur moyenne positive, la ligne i de la colonne I est remplie d'un 1.
   - sinon, la ligne i de la colonne I est remplie d'un 0.
2) calcule la colonne J « alternance >0 » en effectuant le produit ligne i à ligne i des deux colonnes précédentes H.I, ce qui permet d'y obtenir les valeurs des données numériques d'un signal AP dérivé du signal filtré L3 précédent. Comme il est montré en figure 8, ce nouveau signal AP est purgé de ses pseudo - alternances négatives AN.
3) génère, à partir de la colonne J « alternance>0 » les premières colonnes K « décalage » et L « différence » égale à J - K, comme le module 23 a généré précédemment les colonnes C « 1^{er} décalage » et D « 1^{ière} moyenne » à partir de la colonne B « échantillon », sauf que les sommes ou moyennes sont remplacées par des différences.
4) teste le signe des différences J - K ci-dessus de la ligne i de la colonne L « différence », et remplit la ligne i de la colonne M « différence >0 ? » de 1 si la différence est positive, sinon de 0.
5) génère, à partir de la colonne M « différence >0 ? », les secondes colonnes P « décalage » et Q « différence », comme les premières colonnes K « décalage » et L « différence » ci-dessus à partir de la colonne J « alternance >0 ».
6) génère enfin la colonne S « différence des pics <0 » en remplissant ses lignes i de 1 si les lignes i correspondantes de la colonne L « différence » sont remplies de -1, sinon de 0. Cette dernière colonne S comporte les données numériques d'un signal binaire simultané du signal AP ne comportant que des 0 presque partout, sauf des 1 ou impulsions 9", en regard des pics 9 des alternances positives, comme il est montré en figure 8.

A la fin de la détection des pics, le bloc de calcul 12 lance le module 27 pour exécuter une étape 104 de datation.

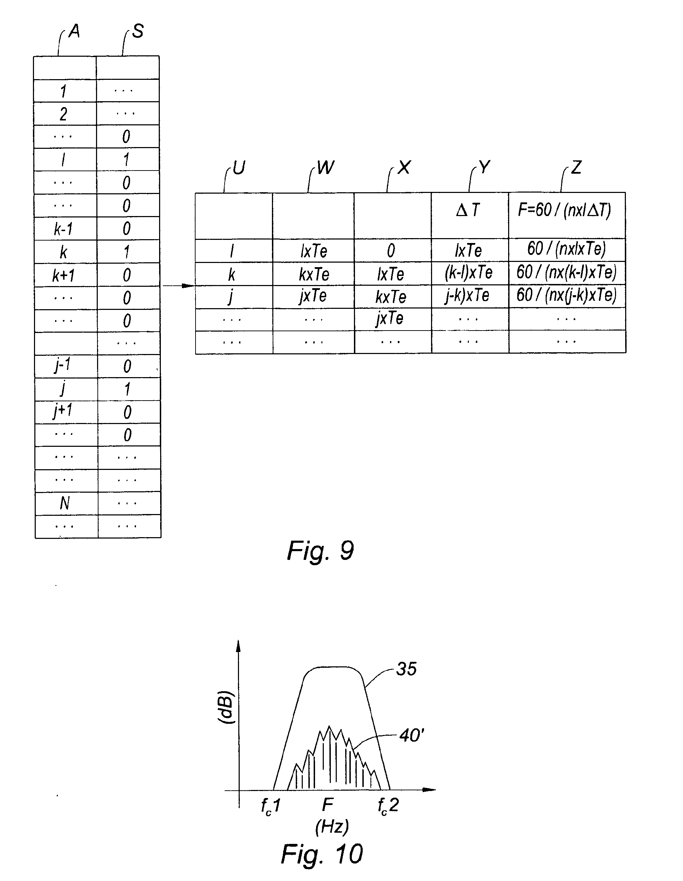

Ce dernier exploite alors la dernière colonne S « différence des pics <0 » établie lors de l'étape 103 et la colonne A « indice i » de la table de la mémoire 22 pour générer la table de la mémoire 14, telle que montrée en figure 9 et expliquée ci-après.

Lors de l'étape 104, le module 27 calcule et remplit successivement cinq colonnes U, W, X, Y, Z de la table de la mémoire 14.
La première colonne U est remplie des indices 1, k, j, ... , correspondant à des lignes non nulle de la colonne S.

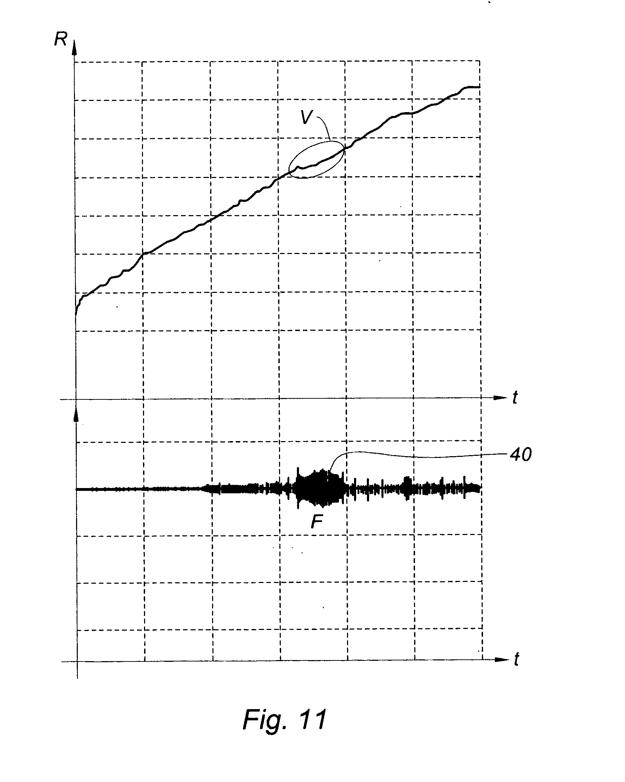

Ensuite, le module 27 :
1) calcule le produit de l'indice 1, j, ou k par le temps d'échantillonnage Te, et le range dans la deuxième colonne W en regard de l'indice correspondant,
2) décale d'une ligne cette deuxième colonne W qu'elle range dans la troisième colonne X,
3) effectue la différence W - X entre ces deux colonnes W et X pour obtenir dans la quatrième colonne Y les intervalles de temps ΔT entre les pics 9", selon la technique de décalage et de différence mise en oeuvre ci-dessus.
4) calcule, selon la formule R(t) = 60 / (n. ΔT), la cinquième colonne Z qui permet de tracer une courbe d'évolution du régime de rotation R(t) en fonction du temps t, et montrée en partie supérieure de la figure 11.

Cette figure 11 montre bien les bruits transitoires ou variations V du régime de rotation du rotor 2.

Ces bruits transitoires V peuvent être filtrés en sortie du module 27 (par calculs de moyennes comme effectués ci-dessus) par un module 28, optionnel, pour éliminer les composantes haute fréquence de la courbe R(t) qui ne correspondent pas à des phénomènes physiques. Ces composants HF peuvent être éliminées par un filtrage, notamment par un filtrage passe bas, par un moyennage ou par d'autres méthodes de lissage.

Les bruits transitoires V peuvent ensuite être analysés en temps réel dans le circuit DSP 16, lequel permet de supprimer la composante pseudo - continue de la courbe du régime R et de caractériser les fréquences de perturbation F du rotor 2, par application d'une FFT (Fast Fourier Transform ou Transformée de Fourier Rapide) sur la dernière colonne générée.

Ici, on connaît à l'avance la valeur de la fréquence perturbatrice F, le DSP 16 comporte un filtre numérique passe bande 35 centré sur F et de fréquences de coupure fc1 et fc2, telles que montrées en figure 10.

Après application de ce filtrage, lors d'une étape 105, on obtient un signal de détection de spectre fréquentiel 40' représentatif du régime rotor R.

Dans le domaine temporel, le signal de détection 40', se présente sous la forme 40 sans composante pseudo - continue telle que montrée en partie inférieure du chronogramme de la figure 11.

Si, lors d'une étape 106 de test effectué en sortie du filtre passe-bande ci-dessus par le circuit DSP 16, le signal de détection 40 ou 40' dépasse un seuil prédéterminé SO en amplitude, une alarme est déclenchée.

Le circuit 16 peut alors instantanément envoyer, à une étape 107, un message (30') d'apparition anormale d'une perturbation de fréquence prédéterminée (F) du régime de rotation du rotor (2), sur le bus 30, vers un système de sécurité de fonctionnement (non représenté).

## Revendications

1. Procédé de détection des variations de régime (R) d'un rotor (2) **caractérisé par le fait qu'**il consiste, en temps réel, à :
- mesurer (1) des signaux (5) représentatifs du défilement des dents (6) d'une roue phonique (3) ou d'un moyen équivalent solidaire du rotor (2) pendant une durée déterminée (T),
- échantillonner, numériser et mémoriser (101) les mesures effectuées pour obtenir un vecteur numérique initial (B),
- extraire (102, 103, 104, 105) du vecteur initial (B) un signal de détection (40) autour d'une fréquence perturbatrice connue (F),
- comparer (106) le signal de détection (40) à un seuil prédéterminé (SO) et
- délivrer (107) un message (30') d'alerte en cas de dépassement.

2. Procédé selon la revendication 1, dans lequel, pour extraire un signal de détection de la fréquence perturbatrice :
- on filtre (102) le vecteur initial (B) et on obtient un vecteur filtré (H),
- on détecte (103) des pics (S) d'alternance des signaux,
- on date (104) les pics (S), on calcule les intervalles de temps (ΔT) séparant les pics adjacents, on établit l'évolution temporelle R(t) du régime (R) à partir de ces intervalles, et
- on filtre (105) ladite évolution autour de la fréquence perturbatrice connue (F).

3. Procédé selon la revendication 2, dans lequel les vecteurs (B, ... , S) sont repérés relativement à une base temporelle (A) de dimension N déterminée à partir du régime (R), des caractéristiques des moyens de mesure (1, n) et de la fréquence perturbatrice (F).

4. Procédé selon l'une des revendications 1 à 3, dans lequel on échantillonne lesdits signaux (5) à une fréquence (Fe) au moins deux fois plus élevée que celles des perturbations transitoires (9') présents dans les signaux (5).

5. Procédé selon l'une des revendications 2 à 4, dans lequel les opérations vectorielles appliquées aux vecteurs comprennent exclusivement des sommes, des différences, des tests et des décalages de coordonnées.

6. Système (10) de détection des variations de régime (R) d'un rotor (2), comprenant des moyens de mesure (1) comportant un capteur (4) délivrant en temps réel des signaux (5) représentatifs de la vitesse de rotation du rotor (2), **caractérisé par le fait qu'**il comprend des moyens (11, 15) de traitement des signaux comportant un bloc de calcul (12, 16) calculant en temps réel la vitesse de rotation pour, le cas échéant, instantanément émettre un message (30) de perturbation du régime (R) et délivrant un message (30') d'apparition anormale d'une perturbation de fréquence (F) plus faible que la fréquence de rotation du rotor (2).

7. Système selon la revendication 6, dans lequel les moyens de mesure (1) comportent une roue phonique (3) solidaire du rotor (2) délivrant des signaux (5) représentatifs du défilement des dents (6) de la roue phonique (3), et dans lequel les moyens de traitement (11, 15) échantillonnent lesdits signaux (5) avant de les numériser et de les mémoriser sous forme numérique.

8. Système selon la revendication 7, dans lequel les moyens de traitement (11, 15) échantillonnent les signaux (5) à une fréquence (Fe) au moins deux fois plus élevée que celle maximale des perturbations transitoires (9') qui peuvent y être présents.

9. Système selon l'une des revendications 6 à 8, dans lequel le bloc de calcul (11) comporte un module (23) de filtrage éliminant les éventuels bruits parasites (9') présents dans les signaux (5).

10. Système selon l'une des revendications 6 à 9, dans lequel le bloc de calcul (11) comporte un module (25) de détection de pics (9) dans les signaux (5), correspondant aux passages des sommets des dents (6) devant le capteur (4).

11. Système selon la revendication 10, dans lequel le bloc de calcul (11) date les pics (9), et en déduit les intervalles de temps (ΔT) les séparant.

## Claims

1. Method of detecting the variations of speed (R) of a rotor (2) **characterized by** the fact that it consists, in real time, in:
- measuring (1) signals (5) representative of the march-past of the teeth (6) of a phonic wheel (3) or of an equivalent means secured to the rotor (2) for a determined duration (T),
- sampling, digitizing and storing (101) the measurements performed to obtain an initial digital vector (B),
- extracting (102, 103, 104, 105) from the initial vector (B) a detection signal (40) around a known disturbing frequency (F),
- comparing (106) the detection signal (40) with a predetermined threshold (SO) and
- delivering (107) an alert message (30') in the event of overshoot.

2. Method according to Claim 1, in which, to extract a signal of detection of the disturbing frequency:
- the initial vector (B) is filtered (102) and a filtered vector (H) is obtained,
- peaks (S) of alternation of the signals are detected (103),
- the peaks (S) are dated (104), the time intervals (AT) separating the adjacent peaks are calculated, the temporal evolution R(t) of the speed (R) is established on the basis of these intervals, and
- the said evolution is filtered (105) around the known disturbing frequency (F).

3. Method according to Claim 2, in which the vectors (B, ..., S) are tagged in relation to a time base (A) of dimension N determined from the speed (R), the characteristics of the measurement means (1, n) and the disturbing frequency (F).

4. Method according to one of Claims 1 to 3, in which the said signals (5) are sampled at a frequency (Fe) at least twice as high as those of the transient disturbances (9') present in the signals (5).

5. Method according to one of Claims 2 to 4, in which the vector operations applied to the vectors comprise exclusively sums, differences, tests and coordinate shifts.

6. System (10) for detecting the variations of speed (R) of a rotor (2), comprising measurement means (1) comprising a sensor (4) delivering in real time signals (5) representative of the rate of rotation of the rotor (2), **characterized by** the fact that it comprises means (11, 15) of signals processing comprising a calculation block (12, 16) calculating in real time the rate of rotation so as, if appropriate, to instantaneously emit a message (30) of disturbance of the speed (R) and delivering a message (30') of abnormal appearance of a disturbance of frequency (F) lower than the frequency of rotation of the rotor (2).

7. System according to Claim 6, in which the measurement means (1) comprise a phonic wheel (3) secured to the rotor (2) delivering signals (5) representative of the march-past of the teeth (6) of the phonic wheel (3), and in which the processing means (11, 15) sample the said signals (5) before digitizing them and storing them in digital form.

8. System according to Claim 7, in which the processing means (11, 15) sample the signals (5) at a frequency (Fe) at least twice higher than the maximal frequency of the transient disturbances (9') which may be present therein.

9. System according to one of Claims 6 to 8, in which the calculation block (11) comprises a filtering module (23) eliminating any spurious noise (9') that might be present in the signals (5).

10. System according to one of Claims 6 to 9, in which the calculation block (11) comprises a module (25) for detecting peaks (9) in the signals (5), corresponding to the transits of the crests of the teeth (6) in front of the sensor (4).

11. System according to Claim 10, in which the calculation block (11) dates the peaks (9), and deduces therefrom the time intervals (AT) separating them.

## Patentansprüche

1. Verfahren zur Erfassung der Schwankungen der Drehzahl (R) eines Rotors (2),
**dadurch gekennzeichnet,**
**dass** es darin besteht, in Realzeit
- während einer festgelegten Dauer (T) Signale (5) zu messen, die dem Durchlauf der Zähne (6) eines Schallrades (3) oder eines vergleichbaren Mittels, das fest mit dem Rotor (2) verbunden ist, entsprechen,
- von den durchgeführten Messungen Momentwerte zu nehmen, sie zu digitalisieren und zu speichern (101), um einen numerischen Anfangsvektor (B) zu erhalten,
- aus dem Anfangsvektor (B) ein Erkennungssignal (40) um eine bekannte Störfrequenz (F) herum zu extrahieren (102, 103, 104, 105),
- das Erkennungssignal (40) mit einem vorbestimmten Schwellenwert (SO) zu vergleichen (106), und
- bei einer Überschreitung eine Alarmmeldung (30') abzugeben (107).

2. Verfahren nach Anspruch 1, wobei zur Extraktion eines Erkennungssignals (40) von der Störfrequenz:
- der Anfangsvektor (B) gefiltert (102) wird und ein gefilterter Vektor (H) erzielt wird,
- Wechselspitzen (S) der Signale erfasst (103) werden,
- die Spitzen (S) datiert (104) werden, die Zeitintervalle (ΔT) zwischen aufeinander folgenden Spitzen berechnet werden, die zeitliche Entwicklung R(t) der Drehzahl (R) aus diesen Intervallen bestimmt wird, und
- diese Entwicklung um die bekannte Störfrequenz (F) herum gefiltert (105) wird.

3. Verfahren nach Anspruch 2, wobei die Vektoren (B, ..., S) bezogen auf eine zeitliche Basis (A) der Dimension N, die aus der Drehzahl (R), aus den Kennlinien der Messmittel (1, n) und aus der Störfrequenz (F) bestimmt wird, bezeichnet werden.

4. Verfahren nach einem der Ansprüche 1 bis 3, bei dem von den genannten Signalen (5) bei einer Frequenz (Fe), die mindestens um das Doppelte höher ist als die der in den Signalen (5) vorhandenen Durchgangsstörungen (9'), Momentwerte genommen werden.

5. Verfahren nach einem der Ansprüche 2 bis 4, wobei die an den Vektoren ausgeführten Vektoroperationen ausschließlich Summen, Differenzen, Tests und Verschiebungen von Koordinaten umfassen.

6. System zur Erfassung der Drehzahlschwankungen (R) eines Rotors (2), das Messmittel (1) mit einem Fühler (4) umfasst, der in Realzeit Signale (5) liefert, die die Drehgeschwindigkeit des Rotors (2) darstellen,
**dadurch gekennzeichnet,**
**dass** es Mittel (11, 15) zur Verarbeitung der Signale aufweist, die einen Rechenblock (12, 16) umfassen, der in Realzeit die Drehgeschwindigkeit berechnet, um ggf. sofort eine Störungsmeldung (30) bezüglich der Drehzahl (R) zu senden, und der eine Meldung (30') des unnormalen Auftretens einer Frequenzstörung (F) abgibt, die kleiner ist als die Drehfrequenz des Rotors (2).

7. System nach Anspruch 6, bei dem die Messmittel (1) ein Schallrad (3) umfassen, das fest mit dem Rotor (2) verbunden ist und Signale (5) liefert, die dem Durchlauf der Zähne (6) des Schallrads (3) entsprechen, und bei dem die Verarbeitungsmittel (11, 15) von diesen Signalen (5) Momentwerte nehmen, sie digitalisieren und in digitaler Form speichern.

8. System nach Anspruch 6, bei dem die Verarbeitungsmittel (11,15) von den Signalen (5) bei einer Frequenz (Fe), die mindestens um das Doppelte höher ist als die maximale Frequenz der in ihnen möglicherweise vorhandenen Durchgangsstörungen (9'), Momentwerte nehmen.

9. System nach einem der Ansprüche 6 bis 8, bei dem der Rechenblock (11) ein Filtermodul (23) enthält, das eventuelle in den Signalen (5) vorhandene Störgeräusche (9') beseitigt.

10. System nach einem der Ansprüche 6 bis 9, bei dem der Rechenblock (11) ein Modul (25) zur Erkennung von Spitzen (9) in den Signalen (5) enthält, die den Durchläufen der Spitzen der Zähne (6) vor dem Fühler (4) entsprechen.

11. System nach Anspruch 10, bei dem der Rechenblock (11) die Spitzen (9) datiert und daraus die Zeitintervalle (ΔT) zwischen diesen ableitet.
